# EUROPEAN PATENT APPLICATION

(11) **EP 2 786 916 A1**
(43) Date of publication of application: **08.10.2014**
(21) Application number: 12852825.4
(22) Date of filing: 22.11.2012
(51) Int. Cl.: B62D 6/00, B60K 7/00, B60L 15/20, B62D 7/14, B62D 101/00

(54) **AUTOMOBILE**

(30) Priority: 28.11.2011 JP 2011258657
(71) Applicant: NTN Corporation, Osaka-shi, Osaka 550-0003 (JP)
(72) Inventor: MAKINO, Tomoaki, Iwata-shi Shizuoka 438-0037 (JP); YAMAGATA, Akira, Iwata-shi Shizuoka 438-0037 (JP)
(74) Representative: Baumgärtel, Gunnar
(86) International application number: PCT/JP2012/080324
(87) International publication number: WO 2013/080886

(57) **Abstract**

Having three or more vehicle wheels (1, 29 and also having a diverting mechanism (4) that can independently divert each of the vehicle wheels (1, 2), a driving wheel of the vehicle wheels (1, 2) is run driven by a run drive mechanism (5) having an independent prime mover (6). Accordingly, an unusual traveling operation, which results in a in-situ swing or a sidewise movement is enabled. In an automobile of the above given construction, a travel mode switching unit (41) is provided to perform switching between a usual travel mode and an unusual travel mode. By so constructing, the switching of a travel mode between an unusual travel mode and a usual travel mode can be implemented as intended by a driver and there is no possibility that the switching may occur accidentally.

## Description

### CROSS REFERENCE TO THE RELATED APPLICATION

This application is based on and claims Convention priority to Japanese patent application No. 2011-258657, filed November 28, 2011, the entire disclosure of which is herein incorporated by reference as a part of this application.

### BACKGROUND OF THE INVENTION

### (Field of the Invention)

The present invention relates to an automotive vehicle such as, for example, an electric automobile having its entire wheels that can be independently diverted and also having its respective driving wheels capable of being independently driven.

### (Description of Related Art)

An electric automobile or the like having its entire wheels of which can be independently steered or diverted and respective driving wheels of which can be independently driven has been suggested (in, for example, the patent document 1 listed below). The electric automobile designed as disclosed in the patent document 1 may be capable of performing an unusual and special automotive movement, which conventional normal automobiles are unable to do, such as, for example, an in-situ swing about the vertical axis passing through the geometric center of the automobile itself or a sidewise movement of the automobile itself in a direction perpendicular to the longitudinal sense thereof. For this reason, movement of the automobile into or out of a garage or a parking space, or turnaround in a limited space or a limited roadway can be accomplished freely.
[Patent Document 1] Japanese Patent No. 4541201

An unusual automobile movement such as the in-situ swing or the sidewise movement that is quite different from a usual or ordinary automobile operating such as, for example, a straight movement or a curving movement that most conventional automobiles are able to do. Change in mode of operation of the automobile between the usual travel mode and the unusual travel mode is indeed quite different from the change made by the automobile driver when the automobile is going to make a turn at a curved road or a traffic intersection. Accordingly, if the mode of operation of the automobile changes from the usual travel mode to the unusual travel mode, or vice versa, beyond the will of the driver of the automobile as a result of, for example, improper maneuvering or automated maneuvering, it appears that the automobile will undergo an unexpected behavior that markedly departs from the driver's expectation so that the automobile will no longer become controllable.

In view of the foregoing, the present invention has for its primary object to provide an automobile of a type capable of moving under an unusual travel mode such as, for example, capable of undergoing the in-situ swing or the sidewise movement, in which the change between the usual and unusual travel modes can be accomplished at the will of the automobile driver and will not inadvertently occur beyond the will of the automotive driver.

The summary of the present invention will be hereinafter described with the aid of reference numerals shown in the accompanying drawings and used for facilitating a better understanding of preferred embodiments of the present invention.

### SUMMARY OF THE INVENTION

The automobile designed in accordance with the present invention is of a type which includes three or more vehicle wheels 1 and 2; a diverting mechanism 4 configured to independently divert the each vehicle wheel; and a run drive mechanism 5 configured to drive driving wheels among the vehicle wheels 1 and 2, including prime movers 6 for independently driving each driving wheel. The diverting mechanism 4 and the run drive mechanism 5 are so designed and so configured as to allow the automobile to assume one of a sidewise travel mode and an in-situ swing mode. In the sidewise travel mode, each of the wheels is rendered to face sidewise relative to the automobile so that each of the driving wheels can roll in the same sidewise direction. In the in-situ swing mode, the wheels are oriented in a direction following a common circumference or in a direction following a circumference among a plurality of coaxial circles so that the driving wheels can roll in the same rotation direction relative to a center of the automobile in a plain view. The automobile of the present invention further includes a travel mode switching unit 41 manipulatable by an automobile driver configured to selectively switch between an unusual travel mode, in which the automobile undergoes an unusual movement in one of the sidewise moving mode and the in-situ swing mode, and a usual travel mode in which the automobile undergoes a usual movement in a mode other than the unusual travel mode.

According to the present invention, since the travel under the unusual travel mode, which is the sidewise moving mode or the in-situ swing mode, can be performed, the movement into or out of a garage or a parking space, or a direction diversion at a narrow space or roadway can be accomplished freely. In such case, since the use is made of the travel mode switching unit 41 manipulatable by the driver to switch between the unusual travel mode, under which an unusual traveling such as the sidewise moving mode or the in-situ swing mode takes place, and the usual travel mode, under which the operation in a mode other than the unusual traveling takes place, the travel mode does not change unless the driver operates the travel mode switching unit. Since the usual travel mode and the unusual travel mode differ extremely markedly from each other unlike the difference of the curving angle, when the switching or changeover takes place by reason of an erroneous operation of the driving operation and the automated driving while the driver is in an unconscious state, it may be expected that no further proper driving operation can be accomplished. But the provision of the travel mode switching unit as described above makes it possible that the travel mode can be switched while the driver is at all times in a conscious state and, therefore, the safety factor increased.

In an embodiment of the present invention, the travel mode switching unit 41 may be switchable only when the automobile is at stoppage or is running at a speed not higher than a predetermined speed. Since the usual travel mode and the unusual travel mode are extremely different in respect of the travel mode, even though the driver is conscious of it, it may occur that no proper travel takes place if the switching takes place while the travel speed is high. By enabling the switching to be effected at the time of the halt or at the low speed travel as discussed above, a proper vehicle operation immediately after the switching can be accomplished stably.

In another embodiment of the present invention, the travel mode switching unit 41 may include a plurality of input operating units 42 to 45 and a mode changeover control unit 34 configured to switch the travel mode in response to an input from the input operating unit, in which case the mode changeover control unit 34 enables the switching only when the plurality of the input operating units 42 to 45 are simultaneously in an input operating condition or only when, after any of the input operating units 42 to 45 has been input operated, the other input operating unit 42 to 45 is input operated. Even though the switching is made possible only when the travel mode switching unit 41 is operated, an accident contact of a portion of the body of the driver or a property with the travel mode switching unit 41 will result in the travel mode switching unit 41 being operated, resulting in a switching enabled condition. In this respect, the travel mode switching unit 41 is so designed that the switching is possible when the plurality of the input operating units 42 to 45 are simultaneously held in an input operable condition, or when an input operation of any one of the input operating units 42 to 45 is followed by an input operation of any other input operating units 42 to 45, and it is scarcely possible that those two operations are performed accidentally. For this reason, the accidental or inadvertent switching between the usual travel mode and the unusual travel mode can be further assuredly avoided with the safety factor increasing accordingly.

In a further embodiment of the present invention, the travel mode switching unit 41 may include one or a plurality of input operating units 42 to 45 and a mode changeover control unit 34 configured to switch the travel mode in response to an input of the input operating unit 42 to 45, in which case at least one of the input operating units 42 to 45 is provided in concomitance with a diversion input unit 21, 27 with which the driver operates the diverting mechanism 4. For example, in the case that the diversion input unit 21, 27 is a lever-shaped joystick, the input operating units 42 to 45 for mode switching purpose may be provided in a head or peripheral surface or the like of the joystick. Where the input operating unit 42 to 45 for mode switching purpose is available in a plural number, the length of time required in operating will be prolonged because of the operation of the plurality of those input operating units 42 to 45. However, in most cases, the driver is in contact with the diversion input unit 21, 27 during the driving and, if the input operating unit 42 to 45 for mode switching purpose is provided in concomitance with the diversion input unit 21, 27, the operation of the input operating unit 42 to 45 for switching purpose by the driver can be accomplished by a movement of some of the fingers or the like and it can be done quickly.

In a different embodiment of the present invention, the travel mode switching unit 41 may include one or a plurality of input operating units 42 to 45 and a mode changeover control unit 34 configured to switch the travel mode in response to an input of the input operating unit, in which case at least one of the input operating units 42 to 45 is provided separate a distance from a diversion input unit 21, 27 with which the driver operates the diverting mechanism 4. If the input operating unit 42 to 45 for mode switching purpose is provided in the vicinity of the diversion input unit 21, 27, it can be operated quickly, but the possibility of being erroneously operated become high. For this reason, one of the input operating unit 42 to 45 for mode switching purpose is provided separate from the diversion input unit 21, 27 so that the possibility of an accidental erroneous operation occurring can be reduced.

In a yet further embodiment of the present invention, an drive operating unit, 21, 27 with which the driver operates the diverting mechanism 4 and the run drive mechanism 5 under the usual travel mode, and an drive operating unit 21, 27, with which the drier operates the diverting mechanism 4 and the run drive mechanism 5 under the unusual travel mode, may be common to each other. The drive operating unit 21, 27 may be a joystick. Where the drive operating unit 21, 27 for the usual travel mode and the drive operating unit 21, 27 for the unusual travel mode are common to each other, the number of operating members of the drive operating unit 21, 27 may be small enough to make it simple and a marginal space in a driver's seat can be secured in the vicinity of the driver.

In a still further embodiment of the present invention, an drive operating unit 21, 27, with which the driver operates the diverting mechanism 4 and the run drive mechanism 5 under the usual travel mode, and an drive operating unit 21, 17, with which the drier operates the diverting mechanism 4 and the run drive mechanism 5 under the unusual travel mode, may be provided separately of each other. For example, the steering wheel 27 may be utilized during the usual travel mode, and the joystick 21 may be utilized during the unusual travel mode. In such case, although the number of the operating members increases, the drive can be made among the drive operating units that is easy to handle even during the usual travel mode and the unusual travel mode.

In a further different embodiment of the present invention, the prime mover 6 of the run drive mechanism 5 may be an electrically powered motor and the run drive mechanism 5 may be an in-wheel motor drive device. Where the prime mover 6 for running purpose is an electrically powered motor, particularly in the case of the in-wheel motor drive device, it is easy to render the automobile to be of a type capable of accomplish the entire wheels independent diversion and the entire wheels independent drive.

Any combination of at least two constructions, disclosed in the appended claims and/or the specification and/or the accompanying drawings should be construed as included within the scope of the present invention. In particular, any combination of two or more of the appended claims should be equally construed as included within the scope of the present invention.

### BRIEF DESCRIPTION OF THE DRAWINGS

In any event, the present invention will become more clearly understood from the following description of preferred embodiments thereof, when taken in conjunction with the accompanying drawings. However, the embodiments and the drawings are given only for the purpose of illustration and explanation, and are not to be taken as limiting the scope of the present invention in any way whatsoever, which scope is to be determined by the appended claims. In the accompanying drawings, like reference numerals are used to denote like parts throughout the several views, and:
Fig. 1 is a schematic top plane view of an automobile designed in accordance with a first embodiment of the present invention, showing various components thereof employed therein;
Fig. 2 is a schematic top plane view with showing a block diagram of a control system employed in the automobile of Fig. 1;
Fig. 3A is a schematic top plan view of the automobile shown as held under a usual travel mode;
Fig. 3B is a schematic top plan view of the automobile shown as undergoing an in-situ swing;
Fig. 3C is a schematic top plan view of the automobile shown as undergoing a sidewise movement;
Fig. 4A is a perspective view showing one example of a joystick;
Fig. 4B is an explanatory diagram showing an explanatory movement of the joystick;
Fig. 5 is an explanatory diagram showing one example of a seating mount in which the joystick is installed;
Fig. 6 is a flowchart showing the sequence of control accomplished by a travel mode switching unit employed in the automobile;
Fig. 7 is a schematic top plane view of an automobile designed in accordance with another embodiment of the present invention, showing various components thereof employed therein;
Fig. 8 is a schematic top plane view with showing a block diagram of the control system employed in the automobile of Fig. 2; and
Fig. 9 is a schematic top plane view showing another example of driving system that can be applied to the automobile of the present invention.

### DESCRIPTION OF PREFERRED EMBODIMENTS

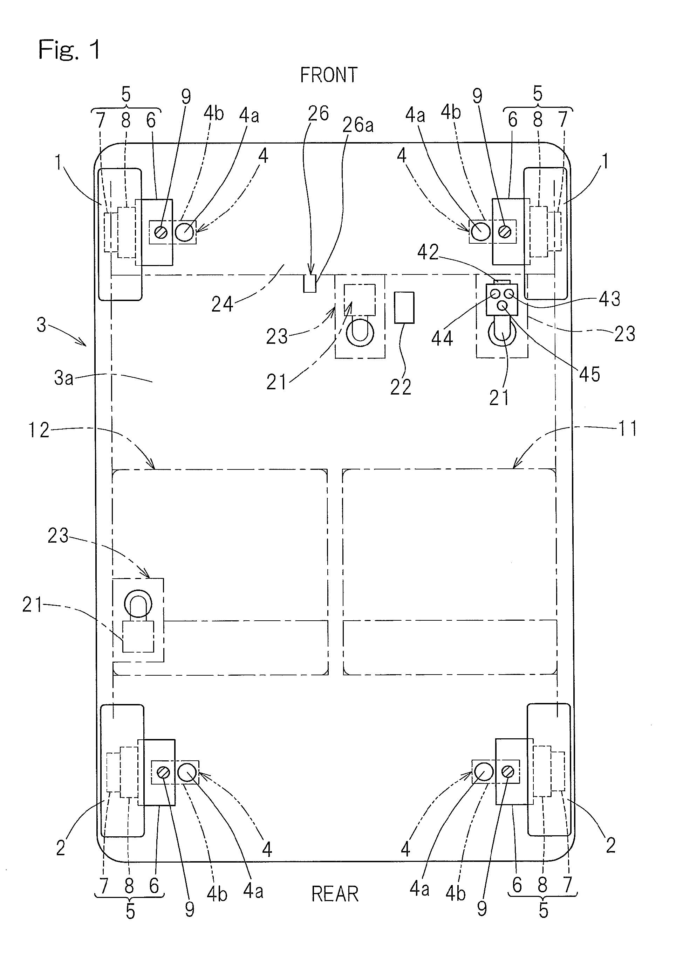

A first embodiment of the present invention will now be described with particular reference to Figs. 1 to 6. Referring to these figures, the automobile shown therein is a four wheeled electric automobile having left and right front wheels 1 and 1, and left and right rear wheels 2 and 2. All of those wheels 1 and 2 are equipped with respective diverting mechanisms 4 capable of independently diverting those wheels 1 and 2. All of those wheels 1 and 2 are, in the example as shown, driving wheels that are driven independently by respective run drive mechanisms 5 each having a primary mover 6.

The run drive mechanisms 5 are in-wheel motor drive devices each comprised of a wheel support bearing assembly 7 for supporting the wheel 1 or 2, a primary mover 6 in the form of an electric motor and a speed reducer or a reduction gear 8 for reducing the speed of rotation, outputted by the corresponding primary mover 6, and then transmitting the reduced rotation to a rotatable side raceway (not shown) of the associated wheel support bearing assembly 7. Each of the run drive mechanisms 5 is of a structure in which the wheel support bearing assembly 7, the primary mover 6, and the reduction gear 8 are integrated as accommodated within a common housing or mutually combined together, and the integrated run drive mechanism 5 is mounted on an automobile body structure 3 through a suspension system (not shown) for pivotal movement about a vertically extending support pin 9. The diverting mechanism 4 includes a diverter drive source 4a, comprised of, for example, an electric motor or the like, and a transmitting mechanism 4b for transmitting the rotation of the diverter drive source 4a to the integrated run drive mechanism 5. The transmitting mechanism 4b is comprised of, for example, a gear train. This transmitting mechanism 4b may however be comprised of a combination of a rotary-to-linear motion converting unit such as, for example, a gear and a ball screw or a rack and pinion mechanism.

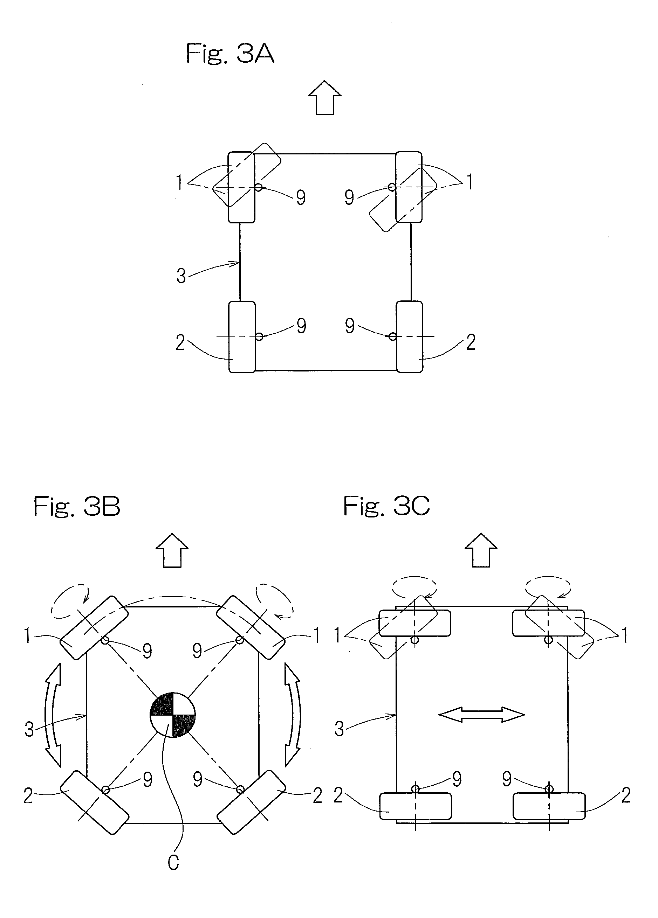

With the use of the configuration, in which all of the wheels 1 and 2 are provided with the respective diverting mechanisms 4 capable of independently diverting those wheels 1 and 2, and the configuration in which all of the driving wheels 1 and 2 are capable of being independently driven, the electric automobile of the present embodiment is capable of being operated under one of a usual travel mode, as shown in Fig. 3A, and an unusual travel mode which is either an in-situ swing mode as shown in Fig. 3B or a sidewise travel mode as shown in Fig. 3C.

The in-situ swing mode shown in Fig. 3B is the form of movement in which the automobile body structure 3 is rotated in situ about the substantial center of the automobile body structure 3 (with the radius of turn being substantially zero). The in-situ swing mode is specifically the form of movement in which each of the wheels 1 and 2 is oriented in a direction along a common imaginary circle C (that is, in a tangential direction) and, at the same time, the wheels 1 and 2, which are driving wheels, are rotated and driven in the same direction as shown by the arrows in Fig. 3B when viewed from a center side of the imaginary circle C. Accordingly, the left and right wheels 1, 1 and 2, 2 are held in a condition in which they are diverted in respective directions reverse to each other from a forward running direction. The in-situ swing mode is rendered rotatable in any of leftward and rightward directions when the direction of rotation of the wheels 1 and 2 which are the driving wheels are switched to the forward and reverse rotation.

The sidewise travel mode shown in Fig. 3C is the form of movement in which the automobile body structure 3 is moved in a sidewise direction at right angles to the forward running direction or in a nearly sidewise direction thereof. This sidewise travel mode is more specifically the form of movement in which the wheels 1 and 2 are oriented transverse relative to the automobile body structure 3 and the wheels 1 and 2, which become the driving wheels, are rotated so as to roll in the same transverse direction. Change from the forward running condition to the sidewise travel mode is accomplished by the construction of the diverting mechanism 4, but in the instance as shown, the wheels 1 and 1 are oriented sidewise by diverting the left and right wheels 1 and 1 in respective directions reverse to each other so as to assume the line symmetry, not to merely increase the diverting angle, but showing the front wheel 1 being diverted as shown by single dotted lines in Fig. 3C. A similar description will be applied to the rear wheels 2 and 2. Where the wheels are diverted and moved sidewise in the manner described above, namely where the wheels 1 and 2, which become the driving wheels, are rotated so as to roll in the sidewise direction, the left and right wheels 1, 1 and 2, 2 are rotatively driven in the respective directions reverse to each other.

The usual travel mode shown in Fig. 3A is an ordinary forward movement and a travel in a curved direction of an arcuate shape and is a mode other than the unusual travel mode which includes the in-situ swing mode and the sidewise travel mode both referred to previously. In this usual travel mode, the left and right wheels 1, 1 and 2, 2 are diverted in the same direction to each other.

Referring to Fig. 1, the drive manipulating system will be described. Within a compartment 3a in the automobile body structure 3, respective seats which are a driver's seat 11 and an assistant driver's seat 12 respectively are provided, and for the drive manipulating system, a joystick 21 concurrently serving as a diverting means and an accelerator operating means, and a brake operating member 22 are provided. The brake operating member 22 is comprised of, for example, a braking pedal or the like and is provided on a forward floor portion of the driver's seat 11.

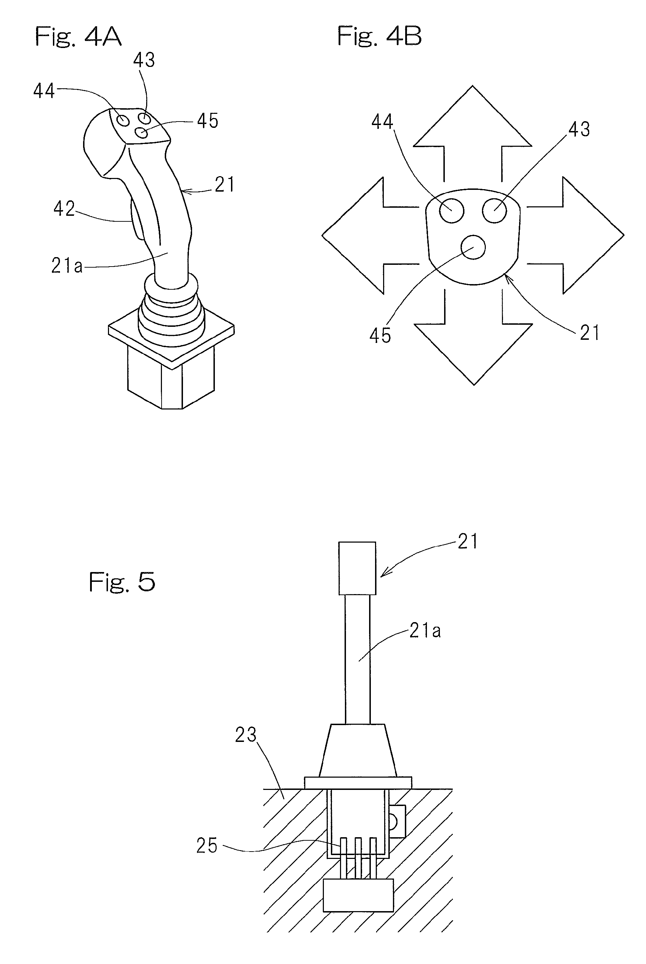

The joystick 21 is a generic term to denote an input operating means through which inputting of the direction and the operating quantity can be accomplished by means of a single operating member that is touched by the driver. Although the joystick 21 may not be necessarily limited to a lever type, in the illustrated embodiment it is employed in the form of a lever type joystick 21 shown in, for example, Fig. 4A. This joystick 21 is of a structure in which a lever 21a which is the operating member is capable of being moved from a neutral position, at which the lever 21a stand erect, in an arbitrarily chosen direction of 360° circumference, and a structure depending on the direction in which it is tilted, a steering input for driving the automobile in that direction can be accomplished. Furthermore, depending on the amount of tilt (the angle of tile from the neutral position), inputting of an accelerator pedaling quantity (corresponding to the amount of an accelerator pedal being depressed) can be accomplished. The joystick 21 is, in the instance as shown, mounted on a dashboard 24 forwardly of the driver's seat 11 through a joystick seating mount 23 in Fig.1.

The joystick seating mount 23 may be provided at one location, but is in the illustrated instance provided at a plurality of locations. The joystick seating mount 23 is provided, for example in the dashboard 24 at left and right locations forwardly of the driver's seat, an intermediate location (the joystick seating mount 23 at an intermediate location being not shown) and a rear portion within the compartment 3a. The joystick seating mount 23 may be provided, in addition to those referred to above, at an inner wall surface within the compartment 3a, at the driver's and assistant driver's seats and others.

The joystick seating mount 23 may be of a type that permit the joystick 21 to be fixed therein, but may be of a type that the joystick 21 can be detachable relative thereto. The term "detachable" referred to above and hereinafter is intended to means a structure in which the joystick 21 can be changed between a mounted condition and a removed condition without using any tool. Where a plurality of joystick seating mounts 23 are provided, the joystick 21 is detachable and has a compatibility with any of the joystick seating mounts 23 by arbitrarily selecting one of them in readiness for receiving the joystick 21.

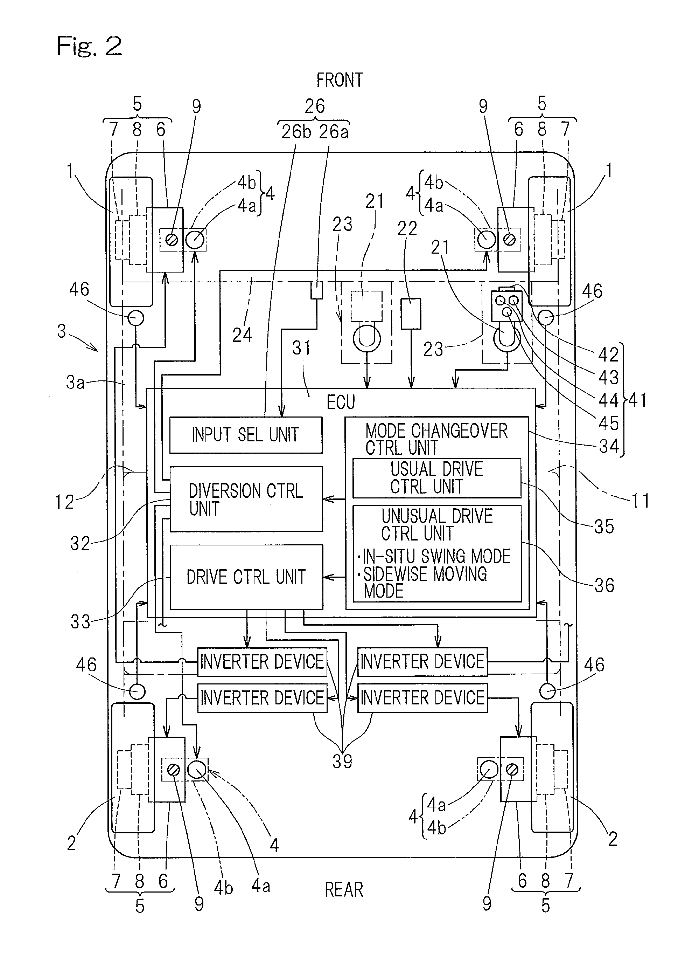

Where the joystick seating mount 23 is of a design in which the joystick 21 can be detachably mounted, the joystick seating mount 23 may be so simply designed to support the joystick 21, or, alternatively, the joystick seating mount 23 may be provided with a plug-in connector 25, shown in Fig. 5, which as a wiring system mounting and demounting of the joystick 21 allows the connector 25 to selectively assume a connected state and a disconnected state, respectively. Where the joystick seating mount 23 is of the design merely for supporting the joystick 21, the joystick 21 is rendered to implement a change of the installing site in a wired condition or to communicate with an electric control unit 31, shown in Fig. 2, in cordless such as, for example, wireless communication, or rendered to be such that a plurality of connectors separate from the joystick seating mount 23 is provided.

As shown in Fig. 1, the joystick 21 may be provided in a plural number, in that case, a joystick selector unit 26 for selecting one of the joysticks 21 to be set in a manipulatable condition is provided. The joystick selector unit 26 includes a selector switch 26a, provided in, for example, the dashboard 24 within the compartment 3a, and an input selector unit 26b for permitting only an input of the joystick 21 selected in accordance with an operation of the selector switch 26a provided in the electric control unit 31 shown in Fig. 2.

Also, a travel mode switching unit 41, shown in Fig. 2, for selecting one of the travel modes in accordance with an operation of the driver, previously described with reference to Figs. 3A to 3C is comprised of a plurality of input operating units 42 to 45, and a mode changeover control unit 34 provided in the electric control unit 31. Of the input operating units 42 to 45, the first input operating unit 42 is a unit for rendering a changeover preparatory mode in which change of the travel mode between a usual travel mode and a non-usual travel mode is enabled and is comprised of, for example, an operating button provided in a front face of the joystick 21. The second to fourth input operating units 43 to 45 are units for selecting a in-situ swing mode, a sidewise movement mode and the normal travel mode, respectively, and are comprised of corresponding operating buttons provided in a top face of an upper end of the joystick 21.

It is to be noted that installation place of each of the input operating units 42 to 45 may not necessarily be limited to the joystick 21, but may be a surface of the dashboard 24, the inner wall surface within the compartment 3a, the seat portion of each of the driver's seats 11 and any other suitable places. Also, the input operating unit 42, for rendering the changeover preparatory mode for the change of the travel mode between the usual travel mode and the unusual travel mode, and the other input operating units 43 to 45 may be separated a distance from each other, in which case, for example, the first input operating unit 42 may be provided in the joystick 21 and the other input operating units 43 to 45 may be provided in the surface of the dashboard 24.

The control system will now be described with particular reference to Fig. 2. As a control unit, the electric control unit (ECU) 31 and a plurality of inverter devices 39 are provided. Each of the inverter device 39 is a device for driving the prime mover 6 in the form of the electric motor in the run drive mechanism 5 for each of the wheels, and is comprised of a power circuit unit such as, for example, an inverter or the like operable to convert a direct current power from a battery (not shown) into an alternating current power and a control circuit unit for controlling the power circuit unit in accordance with a command of the electric control unit 31.

The ECU 31 is an electric control unit for implementing an integrated control and a cooperative control of the automobile in its entirety and is comprised of a microcomputer and electronic circuits and other. The electric control unit 31 may be comprised of a plurality of electric control units for different functionalities and, in the description that follows, the plurality of the electric control units will be collectively referred to as the electric control unit 31 for the sake of brevity. The electric control unit 31 includes a diversion control unit 32, a drive control unit 33, the mode changeover control unit 34 referred to previously, and the input selector unit 26b also referred to previously. The diversion control unit 32 is a unit for supplying a drive command to the diverter drive source 4a in each of the diverting mechanisms 4 in response to a signal indicative of the diverting direction from a diverter operating unit, for example, a signal indicative of the diverting direction inputted by the joystick 21 in the instance as shown. The drive control unit 33 referred to above is a unit for outputting a drive command such as, for example, a torque command and others, to the inverter device 39 of the prime mover 6 for each of the wheels in accordance with the accelerator pedaling amount of an accelerator pedaling unit, for example, the accelerator pedaling amount inputted by the joystick 21 in the instance as shown. It is to be noted that a signal indicative of the accelerator pedaling amount is turned into an acceleration command, a deceleration command and a speed maintaining command.

The mode changeover control unit 34 is a unit for changing the travel mode to one of the usual travel mode and the unusual travel mode, which is the in-situ swing mode and the sidewise movement mode, in response to a mode changeover signal. In the instance as shown, the mode changeover control unit 34 has, other than the changeover function, a usual drive control unit 35 and an unusual drive control unit 36 for causing the diversion control unit 32 and the drive control unit 33 to function in accordance with each travel mode. The mode changeover control unit 34 and the input operating units 42 to 45 for the mode changeover cooperate with each other to form a travel mode switching unit 41.

The usual drive control unit 35 is a unit for causing the diversion control unit 32 and the drive control unit 33 to function usually, that is, so as to accomplish a predetermined basic operation in response to signals indicative of the diversion input and the accelerator pedaling amount from the joystick 21 operating as the diversion accelerator pedaling unit. The basic operation referred to above is an operation to cause the diversion control unit 32 to implement a command to divert in a direction inputted in accordance with an input in the diverting direction and, also, an operation to cause the drive control unit 33 to implement a drive command in dependence on the accelerator pedaling amount.

The unusual drive control unit 36 controls the diversion control unit 32 and the drive control unit 33 so that the in-situ swing mode previously described with reference to Fig. 3B may be resumed in the in-situ swing mode and also so that the sidewise moving mode shown previously described with reference to Fig. 3C may be resumed in the sidewise movement mode. Even though the input of the diverting unit such as, for example, the joystick 21 and the accelerator operating unit are treated in the same manner, the intervention of the mode control units 35 and 36 permits the diversion control unit 32 and the drive control unit 33 to perform different operations.

The travel mode switching unit 41 will now be described in more detail. The travel mode switching unit 41 has the plurality of the input operating units 42 to 45 as hereinbefore described, and the mode changeover control unit 34 capable of implementing a changeover of the travel mode by means of the input of the input operating units 42 to 45. This mode changeover control unit 34 enables the mode changeover only when a plurality of the input operating units 42 to 45 are simultaneously in an input operating condition or only when, after any of the input operating units 42 to 45 has or have been input operated, any other of the input operating units 42 to 45 is input operated. In the embodiment now under discussion, when the first input operating unit 42 is input operated to establish a changeover preparatory mode and any of the other input operating units 43 to 45 (those input operating units 43 to 45 are referred to as "second input operating units") are input operated, or when the first input operating unit 42 and any of the second input operating units 43 to 45 is simultaneously input operated, the mode changeover is enabled. It is to be noted that the wording "(to be) simultaneously input operated" referred to above means that there is an overlapping time in which both are operated although there may be a deviation between the start of the input operation and the termination of the input operation.

The mode changeover control unit 34 referred to above is brought in position to enable the changeover only when the running of the automobile is halted or it is not higher than a predetermined speed in addition to the above described conditions. The determination of the halt of the running or a speed not higher than the predetermined speed made by of the mode changeover control unit 34 is accomplished by, for example, a detection signal and other of a rotational speed sensor 46 provided in, for example, the wheel support bearing assembly 7 for each of the wheels 1 and 2. The term "predetermined speed" referred to above may be determined arbitrarily, but means a speed at which a safe travel can be accomplished even though the running mode is changed, and may be, for example, a speed at which a human being can walk normally.

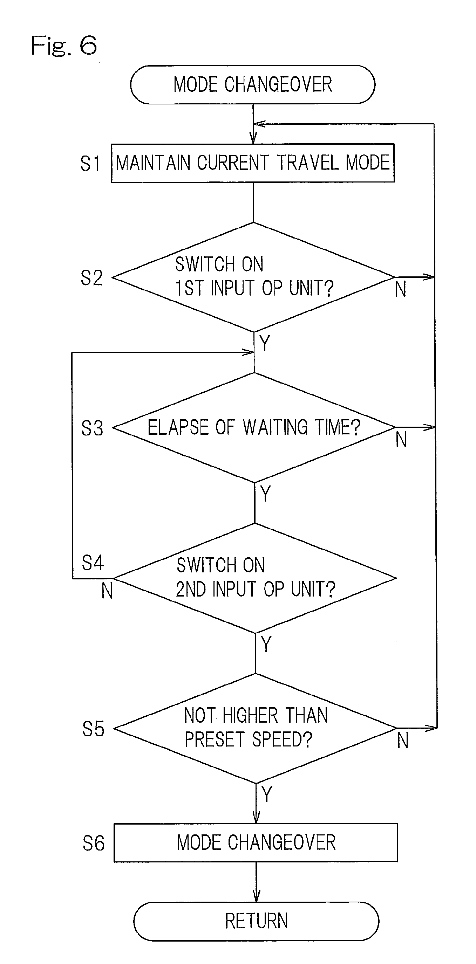

Fig. 6 illustrates a control example of the mode changeover control unit 34. The mode changeover control unit 34 monitors whether or not the first input operating unit 42 is ON at step S2 and, by the time it turned ON, the current running mode is maintained at step S 1.

When the first input operating unit 42 is turned ON at step S2, the mode changeover preparatory mode establishes and, under this condition, waiting is made at steps S3 and S4 until any of the second input operating units 43 to 45 is turned ON. Then the first input operating unit 42 and the second input operating units 43 to 45 may be turned ON simultaneously. Unless any of the second input operating units 43 to 45 are turned ON even though a predetermined operation wait time is passed, the flow goes to a step preceding the step S2 at which a decision is made to determine whether or not the first input operating unit 42 is turned ON and, again, a wait is made by the time the first input operating unit 42 is turned ON. When, by the time the operation wait time is passed, any of the second input operating unit 43 to 45 is turned ON or the first input operating unit 42 and the second input operating units 43 to 45 are simultaneously turned ON, the travel mode changeover is effected at step S6 through a decision step at S5 of a preset speed.

The changeover of the travel mode at step S6 is, in the embodiment now under discussion, is effected to a mode selected by the second input operating units 43 to 45. By way of example, when the input operating unit 43 is operated, the in-situ swing mode occurs; when another input operating unit 44 is operated, the sidewise movement mode occurs; and the other input operating unit 45 is operated, a usual travel mode occurs. It is to be noted that, in the case of a speed not lower than the preset speed, the flow goes back to the initial step S1 and, again, a wait is made until the first input operating unit 42 is turned ON.

According to the automobile of the construction described above, the travel under the in-situ swing mode, shown in Fig. 3B, and the travel under the sidewise moving mode, shown in Fig. 3C, can be carried out one. For this reason, movement into a garage or a parking space or direction diversion on a limited available space or a road surface can be accomplished freely.

In this case, since the travel mode switching unit 41 is employed to accomplish the changeover between the unusual travel mode, in which an unusual traveling under the sidewise moving mode or the in-situ swing mode takes place, and the usual travel mode, in which traveling takes place under a mode other than the unusual traveling, by means of an operation of the driver, the travel mode does not change unless the driver operates the travel mode switching unit. Since the usual travel mode and the unusual travel mode differ in an extremely considerable difference in the travel mode that is different from the extent of difference in curving angle, if switching beyond the will of the driver such as occurring when an erroneous operation of the operating manipulation and an automated drive takes place, it is expected that a proper drive can no longer be carried henceforth. However, the provision of the travel mode switching unit 41 makes it possible to change the travel mode while the driver is conscious of the changeover and, therefore, the safety factor increases.

The travel mode switching unit 41 is capable of performing the changeover only when the automobile is at stoppage or at a speed lower than the prescribed speed. Since the usual travel mode and the unusual travel mode are extremely different in travel mode, when the changeover takes place while the automobile is driven at a high speed even though the driver is conscious, no proper traveling can be effected. With the changeover being enabled only when the automobile is at stoppage or at a low speed as discussed above, an automobile operation that is proper after the changeover can be accomplished stably.

Also, even though the travel mode is switchable only when the travel mode switching unit 41 is operated, it may occur that the travel mode switching unit 41 is operated to establish a switchable condition when a portion of the body of the driver or any other property may unintentionally contact the operating member of the travel mode switching unit 41. In this connection, in the embodiment now under discussion, the travel mode switching unit 41 is so designed as to include the plurality of the input operating units 42 to 45 and the mode changeover control unit 34, the mode changeover control unit 34 being enabled to switch when, as hereinbefore described, the plurality of the input operating units 42 to 45 are in an input operating condition or, when, after the first input operating unit 42 has been input operated, the second input operating units 43 to 45 is input operated subsequently. There is substantially no possibility that those two operations are accidentally performed simultaneously. Accordingly, an accidental switching of the travel mode between the usual travel mode and the unusual travel mode is further assuredly avoided and the safety factor increases.

Each of the input operating units 42 to 45 of the travel mode switching unit 41 is provided in the joystick 21 and, therefore, the following advantages can be obtained. Namely, in the case where there are the plurality of the input operating units 42 to 45 for mode switching purpose and where a plurality of operations of them are to be performed, the length of time required to accomplish such input operation will be large. However, the driver is frequently in contact with the diversion input unit of the joystick 21 under driving, and if the input operating units 42 to 45 for mode switching purpose are provided concomitantly in the diversion input unit 21, the operation of the input operating units for switching purpose, which is conducted by the driver, can be performed by the movement of a little number of fingers or the like and is therefore quickly accomplished.

If the input operating units 42 to 45 for mode changeover purpose are positioned on the joystick 21 which is a diversion inputting unit, a quick operation can be accomplished, but the possibility of the risk of being erroneously operated increases. For this reason, the first input operating unit 42 for mode changeover purpose and any one of the second input operating units 43 to 45 are provided separate a distance from the joystick 21 so that the risk of the accidental erroneous operation can be lowered.

Also, there is provided the joystick 21 for accomplishing an operation of the diverting mechanism 4 and an operation of drive of the run drive mechanism 5 and the joystick 21 can input the direction and the operating amount with only one operating member. For this reason, the traveling operation under the unusual travel mode, which is enabled by the independent diversion of each wheel and the independent drive of each of the driving wheels, such as, for example, the in-situ swing as shown in Fig. 3B and the sidewise movement as shown in Fig. 3C, can be accomplished with a high operability. Also, since it is the operation of the joystick 21 made by the driver, unlike that the travel under the unusual travel mode is performed automatically, a proper operation appropriate to a situation can be accomplished.

Where the joystick seating mount 23 is provided at the plurality of locations and the change of the place of installation of the joystick 21 is enabled, the joystick 21 can be operated at a site where the driver can operate easily. Even where, having a plurality of the joysticks 21, the use is made of the joystick selecting unit 26 for selecting one of the joysticks 21 that is set in an operable condition, the joystick installed at the site where the operation is easy to accomplish may be selected and operated. If each of the plurality of the joysticks are of different types, the joystick of a desired type may be selected and operated. In those cases, if respective inputs of the plurality of the joysticks 21 overlap, the operation will be hampered. In this connection, the operation can be accomplished with no trouble if the use is made of the joystick selecting unit 26 so that only the input of the selected joystick can be accepted.

If there are a plurality of the joysticks 21 and they are capable of being installed at a plurality of places, the selection of the joystick 21 that is easy to operate can be made out of many selections. Even in this case, if only the input of the selected joystick 21 is accepted, the operation can be accomplished with no problem.

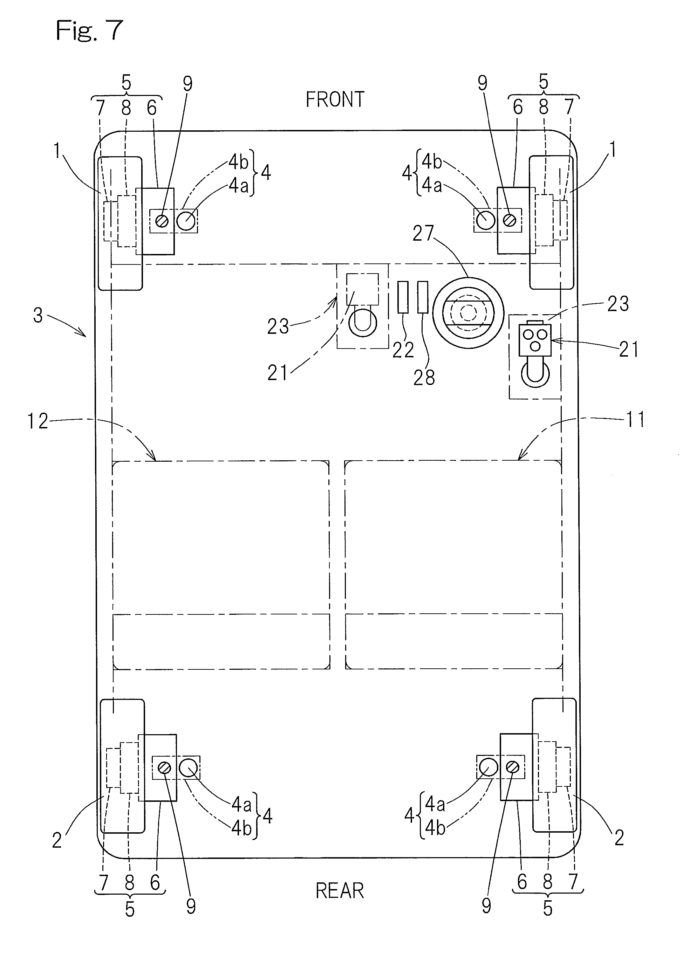

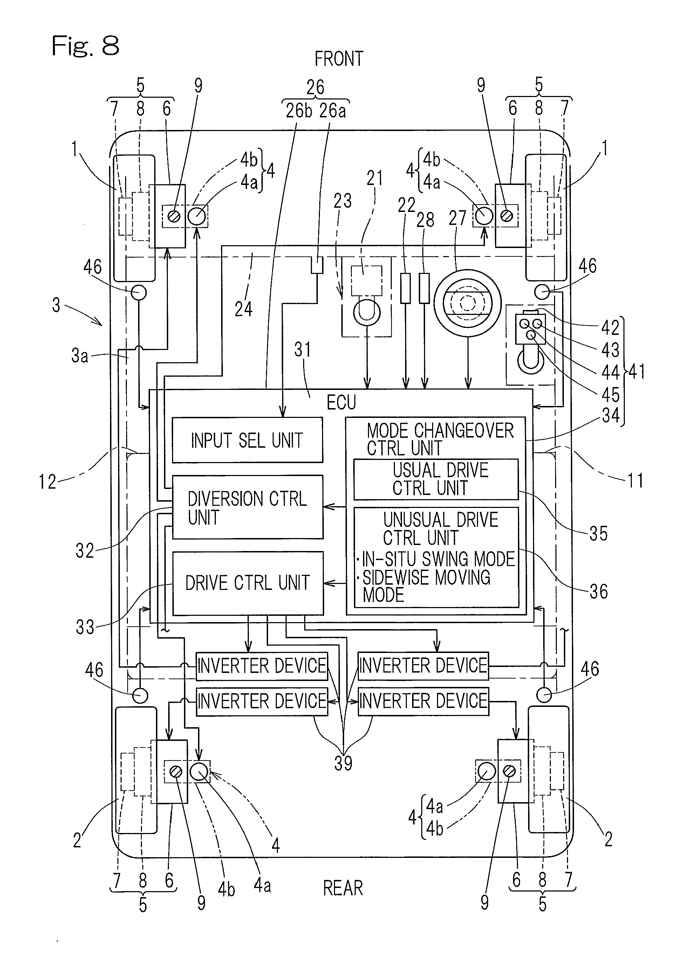

Figs. 7 and 8 illustrate a second embodiment of the present invention. It is to be noted that this embodiment is similar to the first embodiment previously described with particular reference to Figs. 1 to 6 except for specific structural features hereinafter described. In this second embodiment, as a means for operating the diverting mechanism 4, a steering wheel 27 is provided separately from the previously described joystick 21 and an accelerator pedal 28 is also provided. The input selector unit 26b undergoes an automatic change in such a manner that during a basic condition in which no operation of the selector switch 26a is specifically performed or, during the usual traveling, that is, where the running takes place under the above described usual travel mode, only the input of the steering wheel 27 is accepted as a diversion input to perform the diversion, but in the case of the unusual travel mode in which the traveling takes place under the in-situ swing mode or the sidewise moving mode, only the input of the joystick 21 is accepted as the diversion input to perform the diversion. Also, the input selector unit 26a is designed to receive the input of the accelerator pedaling amount only from the accelerator pedal 28 during the condition in which the input of the steering wheel 27 is accepted.

It is to be noted that the input selector unit 26b is concurrently provided with a switching function to receive the input from the joystick 21 and an arbitrary joystick 21 or an arbitrary joystick seating mount 23 by the operation of the selector switch 26a. With respect to the steering wheel 27, it may be detachable relative to a steering wheel installation mount (not shown).

According to the joystick 21, the traveling can be made easily under one of the usual traveling and the unusual traveling, but during the usual traveling the steering wheel 27 is easy to operate because of being accustomed to the conventional automobile. The use of the joystick 21 and the steering wheel 27 makes it possible to operate easily during not only the usual traveling but also the unusual traveling.

Where the steering wheel 27 and the joystick 21 are provided, and if one or both of the steering wheel 27 and the joystick 21 is made detachable, the possibility that a space around the driver's seat 11 may be narrowed because of the presence of the steering wheel 27 or the joystick 21, which is not in use, can be avoided and a larger space can be obtained around the driver's seat. The steering wheel 27 and the joystick 21, which have been removed, may be stored in a predetermined storage side within the automobile.

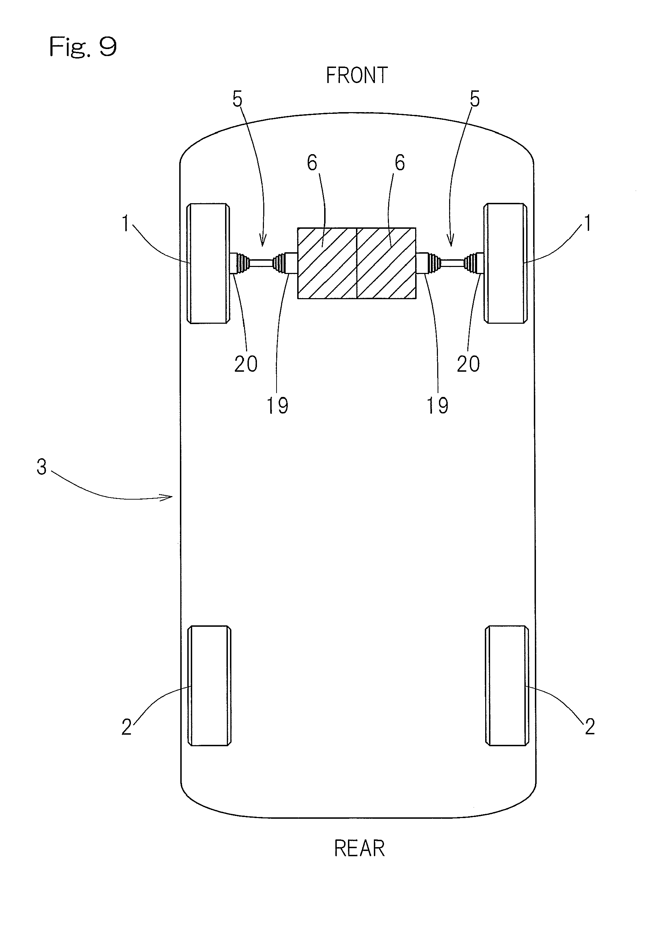

In describing any one of the foregoing embodiments of the present invention, the run drive mechanism 5 has been described as of an in-wheel motor type, but the present invention can be applied to the automobile of a type, in which the run drive mechanism 5 transmits the rotation to the wheel 1 from the prime mover 6 which is installed on a frame (that is, upwardly of the suspension) of the automobile body structure 3, through constant velocity universal joints 19 and 20 as shown in, for example, Fig. 9. The prime mover 6 may be either an electrically powered motor or an internal combustion engine. Also, the number of the wheels possessed by the automobile is not necessarily limited to four as shown and described, but may be three or five or more. The driving wheel out of those vehicle wheels has to be of a type that is all run driven by the run drive mechanism including the prime mover, but the number of the driving wheel may be arbitrarily chosen. By way of example, in the four wheeled automobile, it may be a two wheel drive of the front or rear wheels, or, in a three wheeled automobile using one front or rear wheel, such one front or rear wheel may be rendered to be a driving wheel.

Although the present invention has been fully described in connection with the preferred embodiments thereof with reference to the accompanying drawings which are used only for the purpose of illustration, those skilled in the art will readily conceive numerous changes and modifications within the framework of obviousness upon the reading of the specification herein presented of the present invention. Accordingly, such changes and modifications are. unless they depart from the scope of the present invention as delivered from the claims annexed hereto, to be construed as included therein.

### [Reference Numerals]

- 1, 2: Wheels
- 3: Automobile body structure
- 3a: Compartment
- 4: Diverting mechanism
- 4a: Diverter drive source for diversion purpose
- 5: Run drive mechanism
- 6: Prime mover
- 7: Wheel support bearing assembly
- 8: Reduction gear
- 11: Driver's seat
- 21: Joystick (diversion input unit / drive operating unit)
- 22: Brake operating member
- 23: Joystick seating mount
- 24: Dashboard
- 26: Joystick selector unit
- 26a: Selector switch
- 26b: Input selector unit
- 27: Steering wheel (diversion input unit)
- 28: Accelerator pedal
- 31: Electric control unit (ECU)
- 34: Mode changeover control unit
- 35: Usual drive control unit
- 36: Unusual drive control unit
- 41: Travel mode switching unit
- 42 to 45: Input operating unit
- 46: Rotational speed sensor
- C: Imaginary circle

## Claims

1. An automobile which comprises:
three or more vehicle wheels;
a diverting mechanism configured to independently divert the each vehicle wheel;
a run drive mechanism configured to drive driving wheels among the vehicle wheels, including prime movers for independently driving each driving wheel, the diverting mechanism and the run drive mechanism being of a structure configured to assume one of a sidewise travel mode, in which each of the wheels is rendered to face sidewise relative to the automobile so that each of the driving wheels can roll in the same sidewise direction, and an in-situ swing mode, in which the wheels are oriented in a direction following a common circumference or in a direction following a circumference among a plurality of coaxial circles so that the driving wheels can roll in the same rotation direction relative to a center of the automobile; and
a travel mode switching unit manipulatable by an automobile driver configured to selectively switch between an unusual travel mode, in which the automobile undergoes an unusual movement in one of the sidewise moving mode and the in-situ swing mode, and a usual travel mode in which the automobile undergoes a usual movement in a mode other than the unusual travel mode.

2. The automobile as claimed in claim 1, in which the travel mode switching unit is switchable only when the automobile is at stoppage or is running at a speed not higher than a predetermined speed.

3. The automobile as claimed in claim 1, in which the travel mode switching unit comprises a plurality of input operating units and a mode changeover control unit configured to switch the travel mode in response to an input from the input operating unit, the mode changeover control unit enabling the switching only when the plurality of the input operating units are simultaneously in an input operating condition or only when, after any of the input operating units has been input operated, the other input operating unit is input operated.

4. The automobile as claimed in claim 1, in which the travel mode switching unit comprises one or a plurality of input operating units and a mode changeover control unit configured to switch the travel mode in response to an input of the input operating unit, at least one of the input operating units being provided in concomitance with a diversion input unit with which the driver operates the diverting mechanism.

5. The automobile as claimed in claim 1, in which the travel mode switching unit comprises one or a plurality of input operating units and a mode changeover control unit configured to switch the travel mode in response to an input of the input operating unit, at least one of the input operating units being provided separate a distance from a diversion input unit with which the driver operates the diverting mechanism.

6. The automobile as claimed in claim 1, in which an drive operating unit, with which the driver operates the diverting mechanism and the run drive mechanism under the usual travel mode, and an drive operating unit, with which the driver operates the diverting mechanism and the run drive mechanism under the unusual travel mode are common to each other.

7. The automobile as claimed in claim 1, in which an drive operating unit, with which the driver operates the diverting mechanism and the run drive mechanism under the usual travel mode, and an drive operating unit, with which the driver operates the diverting mechanism and the run drive mechanism under the unusual travel mode are provided separately of each other.

8. The automobile as claimed in claim 1, in which the prime mover of the run drive mechanism is an electrically powered motor.

9. The automobile as claimed in claim 8, in which the run drive mechanism is an in-wheel motor drive device.
